# FASCICULE DE BREVET EUROPEEN

(11) **EP 0 783 676 B1**
(45) Date de publication et mention de la délivrance du brevet: **24.10.2001**
(21) Numéro de dépôt: 96926435.7
(22) Date de dépôt: 19.07.1996
(51) Int. Cl.: G01L 9/00, G01P 15/08

(54) **MICRO-CAPTEUR CAPACITIF A FAIBLE CAPACITE PARASITE**
KAPAZITIVER MINIATURSENSOR MIT NIEDRIGER PARASITÄRER KAPAZITÄT
CAPACITIVE MICROSENSOR WITH LOW STRAY CAPACITANCE

(30) Priorité: 01.08.1995 FR 9509366
(43) Date de publication de la demande: 16.07.1997
(73) Titulaire: THALES AVIONICS S.A., 78141 Vélizy Villacoublay Cédex (FR)
(72) Inventeur: GIROUD, Pierre, F-92402 Courbevoie Cédex (FR); THOMAS, Isabelle, F-92402 Courbevoie Cédex (FR)
(74) Mandataire: Guérin, Michel
(86) Numéro de dépôt international: FR9601143
(87) Numéro de publication internationale: WO9705463

(56) Documents cités:
- EP-A- 0 369 352
- US-A- 5 317 922

## Description

La présente invention concerne le domaine des micro-capteurs capacitifs en silicium. De tels micro-capteurs peuvent par exemple constituer des capteurs de pression, des capteurs d'accélération ...

Ces dernières années, se sont développés de nouveaux types de micro-capteurs en silicium, tirant partie des techniques de gravure du silicium développées dans le cadre de la fabrication des composants électroniques à semiconducteurs. Au début, de tels micro-capteurs étaient constitués de l'assemblage de plaquettes de silicium convenablement gravées et de lames minces de verre servant de boîtier étanche ou de plaques de séparation isolantes entre des plaquettes de silicium, ces lames de verre portant éventuellement divers motifs d'électrodes métalliques.

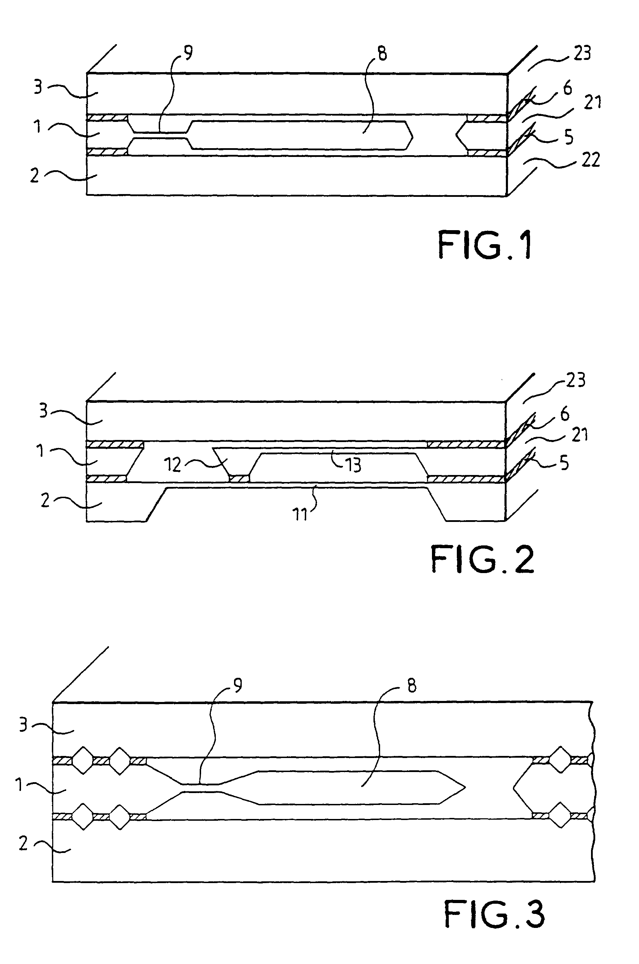

On tend actuellement à développer des micro-capteurs entièrement en silicium, sans plaque de verre jouant un rôle actif. Des exemples très schématiques de tels capteurs sont illustrés en figures 1 et 2.

Le capteur de la figure 1 est un capteur d'accélération et le capteur de la figure 2 un capteur de pression. Chacun de ces capteurs comprend une plaquette de silicium centrale 1 prise en sandwich entre des plaquettes de silicium externes 2 et 3. L'isolement entre les plaquettes est assuré par une première bande isolante, généralement une couche d'oxyde de silicium, 5 entre les plaquettes 1 et 2 et une deuxième bande isolante 6 entre les plaquettes 1 et 3. Ces bandes isolantes prennent la forme d'un cadre disposé entre des plaquettes adjacentes, le long des bords de celles-ci. Des couches d'oxyde peuvent être obtenues par croissance ou dépôt à partir de l'une des plaquettes adjacentes. Une fois les trois plaquettes appliquées les unes contre les autres, une soudure est réalisée par un recuit à une température de 900 à 1100°C. Pour cela, la pratique montre qu'il convient que les surfaces de silicium et d'oxyde de silicium en regard aient de très faibles rugosités, par exemple inférieures à 0,5 nm. Les plaquettes de silicium extrêmes 2 et 3 définissent entre elles et avec la partie de cadre de la plaquette de silicium 1 une région dans laquelle est contenue une atmosphère contrôlée.

La description précédente s'applique communément aux micro-capteurs des figures 1 et 2.

Dans le cas de la figure 1, qui représente schématiquement une vue en coupe d'un accéléromètre, la plaquette de silicium centrale 1 est gravée avant assemblage pour comprendre un cadre et une plaque centrale ou masselotte 8 fixée au cadre par des barres minces de suspension 9. Une seule barre apparaît dans la vue en coupe schématique de la figure 1. De façon classique, on utilisera des systèmes de suspension à une à quatre barres. Les plaquettes externes 1 et 3 délimitent avec le cadre formé à la périphérie de la plaquette centrale un espace vide. On détecte les variations de capacité entre la face supérieure de la masselotte et la plaquette de silicium 3 et éventuellement également entre la face inférieure de la masselotte et la plaquette inférieure 2. Quand le dispositif est soumis à une accélération, la masselotte 8 se déplace par rapport à l'ensemble du dispositif et les capacités susmentionnées varient. Il est également généralement prévu un asservissement électrostatique pour maintenir en place la masselotte par application d'un champ électrique continu et c'est alors le signal d'erreur qui donne une indication de la variation de capacité.

La figure 2 représente très schématiquement une structure constituant un capteur de pression. La plaquette inférieure 2 est gravée pour y former une membrane mince 11. La plaquette 1 est gravée pour former un plot 12 appuyé sur cette membrane. Une lamelle de silicium 13 s'étend entre ce plot et le cadre de la plaquette 1. A nouveau, l'espace délimité par la plaquette supérieure, la plaquette inférieure et le cadre de la plaquette centrale définit un espace vide. Des variations de pression externe déforment la membrane 11 et entraînent une déformation de la tension de la lamelle 13. Cette variation de tension entraîne une variation de la fréquence de résonance du résonateur constitué par la lamelle 13. La variation de fréquence est déduite de la variation de capacité entre la lamelle 13 et la surface en regard de la plaquette 3. De préférence, la face interne de la plaquette 3 est gravée pour former une bande en saillie en face de la lamelle 13.

Dans le cas de la figure 1, des électrodes 21, 22 et 23 doivent être respectivement solidaires des plaquettes 1, 2 et 3. Dans le cas de la figure 2, seules les électrodes 21 et 23 seront nécessaires.

Ces structures de l'art antérieur, qu'elles utilisent directement une mesure de capacité ou une mesure de fréquence de résonance présentent l'inconvénient que ces mesures sont fortement affectées par la présence de capacités parasites élevées. Ces capacités parasites correspondent essentiellement aux capacités entre le cadre formé dans la plaquette 1 et les parties en regard de la plaquette supérieure et/ou inférieure, capacités dont le diélectrique est constitué par les couches d'isolant (oxyde de silicium) 5 et 6.

Afin de limiter la présence de ces capacités parasites, l'objet de la présente invention est de prévoir une structure particulière au niveau de la couche d'isolant, de manière à réduire la surface des condensateurs parasites au niveau du cadre formé dans la plaquette 1 et les parties en regard de la plaquette supérieure et/ou inférieure.

Plus précisément, l'invention a pour objet un micro-capteur capacitif comprenant un sandwich de trois plaquettes de silicium 1, 2, 3, une bande périphérique de chaque face de la plaquette centrale étant accolée à une bande correspondante de la face en regard d'une plaquette externe par l'intermédiaire d'une bande isolante 5, 6, l'une au moins des plaquettes externes constituant une première électrode, la plaquette centrale constituant une deuxième électrode 21 et au moins une partie de cette plaquette centrale formant une capacité variable avec au moins l'une des plaquettes externes, caractérisé en ce qu'au moins une bande isolante possède une surface alvéolée de manière à réduire la surface de contact entre ladite bande et la plaquette de silicium en regard.

Afin d'abaisser davantage les capacités parasites visées, la ou les bandes périphériques de la plaquette centrale peuvent avantageusement comprendre des gravures au niveau des alvéoles de la bande isolante.

De même les bandes périphériques des plaquettes externes peuvent elles aussi présenter des gravures en regard des alvéoles de la bande isolante.

Quand le micro-capteur capacitif constitue un accéléromètre, la partie susmentionnée de la plaquette centrale forme une masselotte en suspension.

Quand le micro-capteur capacitif constitue un capteur de pression, la plaquette inférieure comprend une partie amincie formant membrane et la plaquette centrale comprend un plot monté sur cette membrane et une bande s'étendant entre le plot et une partie périphérique de cette plaquette centrale, cette bande formant avec la plaquette supérieure un résonateur capacitif de caractéristiques variables en fonction de la pression appliquée.

Selon un mode de réalisation, la bande isolante accolée à une bande correspondante de la face en regard d'une plaquette externe, qui dépasse de ladite bande correspondante, assure ainsi une meilleure isolation électrique.

Selon un mode de réalisation de la présente invention, les première et deuxième couches isolantes sont en oxyde de silicium.

La présente invention prévoit aussi un procédé de fabrication d'un micro-capteur qui consiste à graver la plaquette centrale pour former un cadre et une partie centrale sensible, les deux faces du cadre étant revêtues d'une couche d'oxyde de silicium, ladite couche d'oxyde étant gravée de manière à lui conférer une structure alvéolaire ; à former sur une face, tournée vers la plaquette centrale, de chacune des plaquettes externes un cadre constitué de silicium localement gravé ; et à assembler les plaquettes externes et la plaquette centrale, les alvéoles de la couche d'oxyde étant en regard des gravures réalisées dans les plaquettes externes.

Ces objets, caractéristiques et avantages de la présente invention seront exposés dans la description qui va suivre donnée à titre non limitatif et dans les figures annexées parmi lesquelles :
- la figure 1 illustre une vue en coupe schématique d'un micro-capteur d'accélération selon l'art antérieur ;
- la figure 2 illustre une vue en coupe schématique d'un micro-capteur de pression selon l'art antérieur ;
- la figure 3 illustre une vue en coupe schématique d'un micro-capteur d'accélération selon l'invention ;
- les figures 4a, 4b et 4c illustrent les étapes d'un procédé de fabrication selon l'invention permettant d'obtenir un micro-capteur à oxyde alvéolé avec une bande isolante dépassante.

Il est à noter que dans les diverses figures, les épaisseurs relatives des diverses couches et les dimensions relatives des divers éléments ne sont pas à l'échelle mais ont été tracées arbitrairement pour faciliter la lisibilité des figures.

D'autre part, dans les différentes figures, les faces latérales des diverses plaquettes de silicium ont été représentées comme gravées de façon oblique, conformément à l'aspect que prennent ces faces latérales lorsqu'une gravure anisotrope classique de silicium a été réalisé selon les plans (1 1 1). Classiquement il s'agit d'une gravure chimique pouvant être effectuée dans une solution KOH.

La description ci-après de modes de réalisation particuliers de la présente invention est faite dans le cadre d'une structure de type micro-capteur d'accélération correspondant à celle illustrée en figure 1. Néanmoins, la présente invention s'applique de façon générale à d'autres types de micro-capteurs constitués d'un assemblage de plusieurs plaquettes de silicium.

La figure 3 est une vue en coupe schématique d'un micro-capteur d'accélération dans lequel les capacités parasites ont été réduites, en jouant sur la surface des condensateurs parasites.

La structure alvéolaire conférée aux couches d'oxydes présente d'autre part plusieurs avantages que nous allons décrire :
- L'assemblage des trois plaquettes de silicium est généralement réalisé par soudure à haute température (900 à 1100°C) ; après refroidissement, des contraintes importantes sont exercées entre les couches d'oxyde et celles de silicium dont les coefficients de dilatation thermique sont différents. En diminuant la surface de contact entre ces couches de nature différente, les contraintes précitées sont minimisées.
   D'autre part, lors de l'étape de soudure, des impuretés peuvent être piégées donnant lieu à la formation de bulles de gaz au voisinage desdites impuretés, fragilisant le contact entre plaquettes. Dans la configuration de micro-capteur selon l'invention, les bulles de gaz pouvant se former sont piégées dans les alvéoles et ne nuisent pas au contact entre plaquettes de silicium.
- Pour réaliser des micro-capteurs très résistant, il peut être intéressant d'élargir la surface des cadres correspondant aux zones de contact entre plaquettes. Cependant, l'extension de cette surface est directement liée à l'accroissement de capacités parasites. Grâce à la structure alvéolaire proposée dans l'invention, il devient possible d'augmenter la surface de contact en conservant des capacités parasites du même ordre de grandeur que celles tolérées dans les micro-capteurs de l'art antérieur.

L'oxyde de silicium est gravé par exemple par solution de HF pour obtenir la structure alvéolée.

Selon un mode de réalisation, les plaquettes externes de silicium sont également gravées de manière à diminuer encore davantage les capacités parasites inhérentes au dispositif. Typiquement, la largeur des motifs gravés peut être de l'ordre d'une dizaine de micromètres comme la taille des alvéoles réalisées au niveau des couches d'oxyde de silicium.

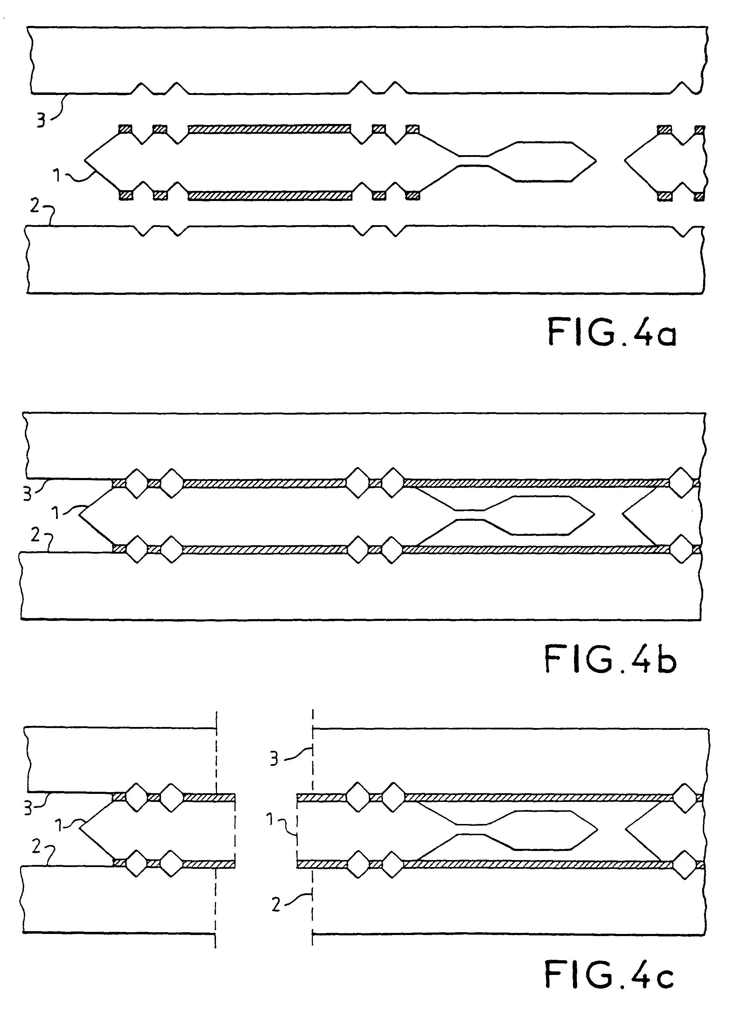

Selon un mode de réalisation, la taille des plaquettes externes est inférieure à celle de la plaquette centrale de manière à réaliser une meilleure isolation électrique, en raison de l'oxyde débordant comme illustré en figure 4.

De manière classique, la fabrication d'un micro-capteur tels que ceux illustrés en figure 1 ou 2, résulte d'un procédé collectif, chaque plaquette faisant initialement partie d'une tranche de silicium de plus grande dimension, la séparation en micro-capteurs individuels se faisant après les opérations finales d'assemblage et éventuellement de formation de contact. Généralement, cette séparation est effectuée par sciage et, lors du sciage, des particules de silicium peuvent être entraînées vers les zones d'effleurement ce qui peut entraîner des courts-circuits au niveau des plaquettes de silicium, en raison de la faible épaisseur des couches d'oxyde de silicium (environ 1 µm).

La figure 4 illustre l'assemblage de trois plaquettes de silicium lors d'une étape de soudure. Les pointillés sont représentatifs de la découpe des micro-capteurs individuels. Les plaquettes externes sont définies par le même type de gravure KOH que la plaquette centrale.

La surface d'oxyde débordant au niveau de la plaquette centrale peut typiquement être de l'ordre de 100 micromètres et ainsi contribuer à assurer une meilleure isolation électrique.

## Revendications

1. Micro-capteur capacitif comprenant un sandwich de trois plaquettes de silicium (1, 2, 3), une bande périphérique de chaque face de la plaquette centrale étant accolée à une bande correspondante de la face en regard d'une plaquette externe par l'intermédiaire d'une bande isolante (5, 6), l'une au moins des plaquettes externes constituant une première électrode, la plaquette centrale constituant une deuxième électrode (21) et au moins une partie de cette plaquette centrale formant une capacité variable avec au moins l'une des plaquettes externes, **caractérisé en ce qu'**au moins une bande isolante possède une surface alvéolée de manière à réduire la surface de contact entre ladite bande et la plaquette de silicium en regard.

2. Micro-capteur capacitif selon la revendication 1, **caractérisé en ce qu'**au moins une bande périphérique présente des gravures au niveau des alvéoles de la bande isolante.

3. Micro-capteur capacitif selon l'une des revendications 1 ou 2, **caractérisé en ce que** ladite partie de la plaquette centrale forme une masselotte en suspension.

4. Micro-capteur capacitif selon l'une des revendications 1 ou 2, **caractérisé en ce que** la plaquette inférieure comprend une partie amincie (11) formant membrane et **en ce que** la plaquette centrale comprend un plot (12) monté sur cette membrane et une bande s'étendant entre le plot et une partie périphérique de cette plaquette centrale, cette bande formant avec la plaquette supérieure un résonateur capacitif de caractéristiques variables en fonction de la pression appliquée.

5. Micro-capteur capacitif selon l'une des revendications 1 à 4, **caractérisé en ce que** la bande isolante accolée à une bande correspondante de la face en regard d'une plaquette externe, dépasse de ladite bande isolante correspondante, de manière à assurer une meilleure isolation électrique.

6. Micro-capteur capacitif selon la revendication 5, **caractérisé en ce que** le dépassement de la bande est de l'ordre d'une centaine de micromètres.

7. Micro-capteur capacitif selon l'une des revendications précédentes, **caractérisé en ce que** la bande isolante est en oxyde de silicium.

8. Micro-capteur capacitif selon la revendication 7, **caractérisé en ce que** la dimension des alvéoles est de l'ordre d'une dizaine de micromètres.

## Claims

1. A capacitive microsensor comprising a sandwich of three silicon plates (1, 2, 3), a peripheral band of each face of the central plate being placed next to a corresponding band on the opposite face of an outer plate through the intermediary of an insulating band (5, 6), at least one of the outer plates forming a first electrode, the central plate forming a second electrode (21) and at least a portion of this central plate forming a variable capacitance with at least one of the outer plates, **characterized in that** at least one insulating band has a honeycombed surface so as to reduce the surface of contact between said band and the silicon plate opposite.

2. A capacitive microsensor according to Claim 1, **characterized in that** at least one peripheral band has etchings on a level with the honeycomb cells of the insulating band.

3. A capacitive microsensor according to one of Claims 1 or 2, **characterized in that** said portion of the central plate forms a suspended inertia block.

4. A capacitive microsensor according to one of Claims 1 or 2, **characterized in that** the lower plate includes a thinned portion (11) forming a membrane, and **in that** the central plate includes a stud (12) mounted on this membrane and a band extending between the stud and a peripheral portion of this central plate, this band forming with the upper plate a capacitive resonator which has variable characteristics as a function of the pressure applied.

5. A capacitive microsensor according to one of Claims 1 to 4, **characterized in that** the insulating band placed next to a corresponding band on the opposite face of an outer plate, extends beyond said corresponding insulating band, so as to ensure an improved electric insulation.

6. A capacitive microsensor according to Claim 5, **characterized in that** the overlap of the band is in the order of one hundred micrometres.

7. A capacitive microsensor according to one of the preceding claims, **characterized in that** the insulating band is made of silicon oxide.

8. A capacitive microsensor according to Claim 7, **characterized in that** the dimension of the honeycomb cells is in the order often micrometres.

## Patentansprüche

1. Kapazitive Mikrosonde, bestehend aus einer Sandwichanordnung von drei Siliziumplättchen (1, 2, 3), wobei ein randseitiges Band auf jeder Seite des zentralen Plättchens an einem entsprechenden Band der gegenüberliegenden Seite eines äußeren Plättchens über ein isolierendes Band (5, 6) anliegt, wobei mindestens eines der äußeren Plättchen eine erste Elektrode und das zentrale Plättchen eine zweite Elektrode (21) bildet und wobei mindestens ein Teil des zentralen Plättchens eine variable Kapazität mit mindestens einem der äußeren Plättchen bildet, **dadurch gekennzeichnet, daß** mindesten ein isolierendes Band eine wabenförmige Oberfläche besitzt, um die Kontaktfläche zwischen dem Band und dem gegenüberliegenden Siliziumplättchen zu verringern.

2. Kapazitive Mikrosonde nach Anspruch 1, **dadurch gekennzeichnet, daß** mindesten ein randseitiges Band Ätzungen in Höhe der Waben des isolierenden Bands besitzt.

3. Kapazitive Mikrosonde nach einem der Ansprüche 1 und 2, **dadurch gekennzeichnet, daß** der Bereich des zentralen Plättchens eine aufgespannte Masse bildet.

4. Kapazitive Mikrosonde nach einem der Ansprüche 1 und 2, **dadurch gekennzeichnet, daß** das untere Plättchen einen eine Membran bildenden verdünnten Bereich besitzt und daß das zentrale Plättchen einen zentralen Stempel (12), der auf dieser Membran aufliegt, und ein Band enthält, das sich zwischen dem Stempel und einem randseitigen Bereich dieses zentralen Plättchens erstreckt, wobei dieses Band mit dem oberen Plättchen einen kapazitiven Resonator mit vom vorliegenden Druck abhängigen variablen Werten bildet.

5. Kapazitive Mikrosonde nach einem der Ansprüche 1 bis 4, **dadurch gekennzeichnet, daß** das isolierende Band, das an ein entsprechendes Band der gegenüberliegenden Seite eines äußeren Plättchens angelegt ist, über das letztgenannte Band vorsteht, um eine bessere elektrische Isolation zu gewährleisten.

6. Kapazitive Mikrosonde nach Anspruch 5, **dadurch gekennzeichnet, daß** die Länge des vorstehenden Bands etwa 100 µm beträgt.

7. Kapazitive Mikrosonde nach einem der vorstehenden Ansprüche, **dadurch gekennzeichnet, daß** das isolierende Band aus Siliziumoxid ist.

8. Kapazitive Mikrosonde nach Anspruch 7, **dadurch gekennzeichnet, daß** die Abmessung der Waben in der Größenordnung von 10 µm liegt.
